# EUROPEAN PATENT APPLICATION

(11) **EP 1 413 603 A1**
(43) Date of publication of application: **28.04.2004**
(21) Application number: 03000612.6
(22) Date of filing: 14.01.2003
(51) Int. Cl.: C08L 25/18, C08F 212/14

(54) **Vibration-damping material composition**

(30) Priority: 25.10.2002 JP 2002311637
(71) Applicant: Titecs Japan Corporation, Ohta-ku, Tokyo (JP)
(72) Inventor: Miura, Tadashi, Iruma-shi, Saitama (JP); Ito, Tetsuya, Tsuruma 3-chome, Machida-shi, Tokyo (JP)
(74) Representative: Müller-Boré & Partner Patentanwälte

(57) **Abstract**

It is an object of the present invention to provide a vibration-damping composition having a high loss modulus (E") and loss factor (η) in a high temperature region, and serviceable over a wide temperature range in a high temperature region. Provided is a (1) vibration-damping composition whose matrix material of organic polymer contains a vibration-damping agent, or (2) vibration-damping composition whose matrix material of organic polymer contains a vibration-damping agent, and inorganic and/or organic filler, wherein the vibration-damping agent is of a polyvinyl phenol-based resin having a recurring unit represented by the general formula [I]:

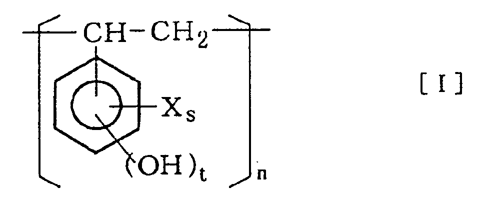

## Description

This invention relates to a vibration-damping material composition, more particularly a vibration-damping material composition capable of damping vibration and sound which is used as a starting material for, or in the form of coating material or others, in particular as sheet-shape formed article, for automobiles, buildings, various industrial machines and tools, home electronic appliances and medical equipment, among others, and a vibration-damping agent used for the same.

Vibration-damping and acoustic insulating materials have been strongly demanded to be lighter in the today's industrialized societies, on account of increasing needs for energy-saving and reduced environmental loads to protect the global environments.

However, the conventional polymer-based vibration-damping material having vibration-damping and acoustic insulation functions depends on the respective viscosity effect and friction effect each provided by the viscoelastic and inorganic filler components it contains, to achieve absorption of vibration by converting vibrational energy from the outside into thermal energy and dissipating the thermal energy into the atmosphere to damp the vibrational energy. Such a material is disadvantageous in that its vibration-damping effect is limited only in a temperature range determined by glass transition temperature of the polymer compound as the constituent and damping time is difficult to arbitrarily control. It's another disadvantage is limitation of decreasing its weight.

Vibration-damping materials with the polymer component incorporated with a variety of organic additives have been proposed as the ones which can solve these disadvantages. These include composites of a polymer with a lower-molecular-weight compound, e.g., triazole- or hindered phenol-based compound. For example, Japanese Patent Application Laid-open (kokai) No.11-68190 discloses a vibration-damping material comprising a chlorinated polyethylene incorporated with a benzothiazole-based compound, and Japanese Patent Application Laid-open (kokai) No.2000-44818 discloses a vibration-damping material comprising a basic polymer with a basic polar side chain incorporated with a hindered phenol-based compound.

However, a hindered phenol-based compound, which is proposed as a vibration-damping agent, has a large alkyl group of butyl or higher, and hence shows limited interactions with a polymer as the matrix or inorganic filler. Therefore, it involves a problem of reduced number of the agent/polymer interactions. Its other disadvantages are inability of exhibiting a high max. loss modulus (E") and loss factor (η) at high temperature, and narrowed serviceable temperature range, because of the interactions being easily dissociated at high temperature. These disadvantages have prevented its industrial application. Moreover, there is much scope for improvement of durability which allows the vibration-damping function to be exhibited for extended periods.

It is an object of the present invention to provide a damping material composition exhibiting better vibration-damping functions than the conventional material containing a phenol-based compound, which has been proposed so far. More specifically, it has a higher max. loss modulus (E") and loss factor (η) at high temperature, wider serviceable temperature range for each of the above properties, and higher durability which allows the composition to exhibit the vibration-damping functions at a high level for extended periods.

The inventors of the present invention have found, after having extensively studied to solve the disadvantages described above, that use of a specific phenol-based compound interacting with the damping material matrix of organic polymer more strongly than the phenol-based compound used for the conventional material allows the damping material composition to exhibit a higher max. loss modulus (E") and loss factor (η) at high temperature, and provides the vibration-damping composition serviceable over a wider temperature range, achieving the present invention.

The present invention provides a vibration-damping composition whose matrix material of organic polymer contains a vibration-damping agent, wherein the vibration-damping agent is of a polyvinyl phenol-based resin having a recurring unit represented by the general formula [I]: 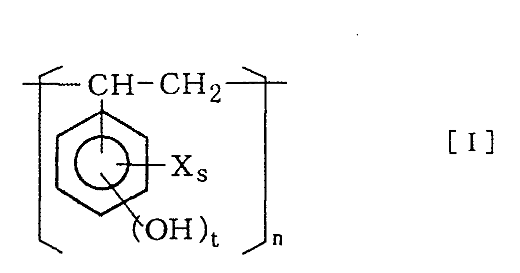 (in the general formula [I], X is at least one type of substituent selected from the group consisting of an alkyl group, alkylol group and halogen atom; "s" is a numeral of 0 to 2; "t" is an integer of 1 or 2; and "n" is a numeral of 5 to 200).

The first aspect of the present invention relates to a vibration-damping composition comprising a matrix material of organic polymer and polyvinyl phenol-based resin having a recurring unit represented by the general formula [I] as a vibration-damping agent. The second aspect of the present invention relates to a vibration-damping composition comprising a matrix material of organic polymer (1), polyvinyl phenol-based resin (2) represented by the general formula [I] as a vibration-damping agent, and inorganic and/or organic filler (3). The present invention includes the following vibration-damping compositions 1) to 11) as the preferred embodiments:
1) the above-described vibration-damping composition, wherein the matrix material of organic polymer is a polybutylene succinate resin, or a mixture of polybutylene succinate resin and acrylic rubber and/or polylactic resin,
2) the above-described vibration-damping composition, wherein the matrix material of organic polymer is a mixture of acrylic rubber (10 to 40%) and polylactic resin (90 to 60%),
3) the above-described vibration-damping composition, wherein the matrix material of organic polymer is in the form of aqueous emulsion,
4) the above-described vibration-damping composition, which is used as a master batch and diluted with an organic polymer other than that for the vibration-damping composition,
5) the above-described vibration-damping composition, wherein the polyvinyl phenol-based resin is a polyparavinyl phenol-based resin,
6) the above-described vibration-damping composition, wherein the polyvinyl phenol-based resin has a weight-average molecular weight of 700 to 50,000,
7) the above-described vibration-damping composition, wherein the organic filler is of sorbitol and/or a fluoropolyolefin,
8) the above-described vibration-damping composition, wherein the inorganic filler is of at least one type selected from the basic ones and acidic ones,
9) the above-described vibration-damping composition, wherein the vibration-damping agent (a) and inorganic and/or organic filler (b) are incorporated in an (a):(b) ratio of 1:0.1 to 1:5,
10) the above-described vibration-damping composition, wherein the matrix material of organic polymer is of acrylic rubber and/or polylactic resin, and contains, as the vibration-damping agent, 5 to 60% by weight of a polyvinyl phenol-based polymer, and
11) the above-described vibration-damping composition, wherein the matrix material of organic polymer is of acrylic rubber and/or polylactic resin, and contains, as the vibration-damping agent, 5 to 60% by weight of a polyvinyl phenol-based polymer, 1 to 20% by weight of sorbitol and/or fluoropolyethylene, and 1 to 50% by weight of mica.

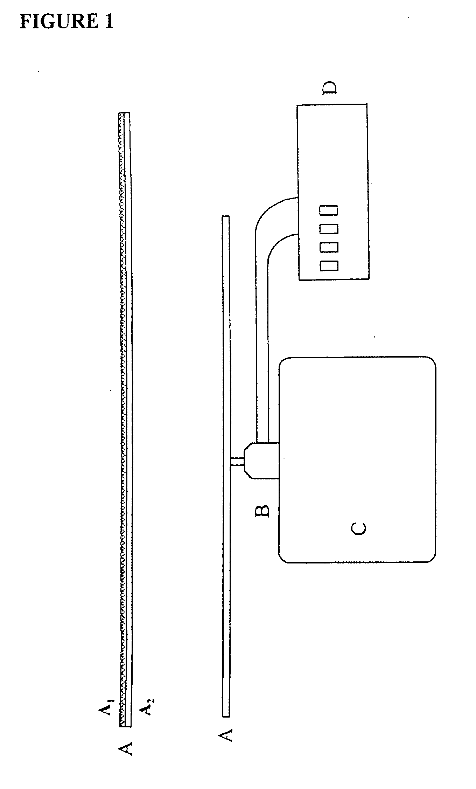

FIG.1 shows an apparatus for evaluating loss factor (η) of the vibration-damping material composition, wherein A: test piece, A₁: sample (sheet of vibration-damping material), A₂: base, B: impedance head, C: vibrator, and D: transfer function analyzer (PC for FFT analysis).

The present invention is described in more detail.

The organic polymer useful as the constituent of the vibration-damping material for the present invention and working as the matrix for the vibration-damping agent is not limited, so long as it has a given molecular weight and melting point, and a polar side chain. More specifically, the organic polymers useful for the present invention include acrylic rubber, butyl rubber, chloroprene, SBR (styrene-butadiene rubber), thermoplastic elastomer (e.g., ethylene/propylene rubber), polylactic resin and polybutylene succinate resin to begin with, polyurethane resin, acrylate resin, epoxy resin, polycarbonate resin, polyester resin, polyether resin, polyvinyl acetate resin, polyacetal resin, ethylene-vinyl acetate copolymer, styrene/vinylacetate copolymer, ethylene/vinyl chloride copolymer, ethylene/methacrylate copolymer, acrylonitrile/styrene copolymer, acrylonitrile-butadiene-styrene copolymer, and chlorinated polyolefins, e.g., chlorinated polyethylene, polypropylene and polybutylene. The organic polymer for the present invention may be optionally selected from the above compounds according to specific purposes of the vibration-damping material. However, preferably it has the polar group interactive with the vibration-damping agent and is effective for environmental preservation. These organic polymers include acrylic rubber, ethylene-acrylic acid copolymer, acrylate-methacrylate resin, acrylate-styrene resin, polyvinyl acetate resin, styrene-vinylacetate resin, ethylene-vinyl acetate copolymer, polycarbonate resin, polylactic resin and polybutylene succinate resin. The more preferable organic polymers for the vibration-damping material composition of the present invention are acrylate-methacrylate resin, acrylic rubber, polylactic resin, polybutylene succinate resin, and a mixture of acrylic rubber and polylactic resin, polylactic resin and polybutylene succinate resin, and acrylic rubber and polybutylene succinate resin.

Acrylic rubber is a rubber-like elastomer, which is a polymer of acrylate ester or copolymer with acrylate ester as a major component. The acrylate esters include methyl acrylate, ethyl acrylate, propyl acrylate, butyl acrylate and hexyl acrylate; and the monomers to be copolymerized with an acrylate ester include methyl vinyl ketone, acrylic acid, acrylonitrile, butadiene and methyl methacrylate.

Polylactic resin is normally produced by ring-opening polymerization of lactide, which is produced by dehydration/polycondensation of lactic acid and depolymerization of the resultant lactic acid oligomer. Polylactic resin, which may be fabricated by a variety of processes, is useful for coping with environmental protection, because of its high bio-degradability.

Polylactic acid having a weight-average molecular weight of 200,000 to 1,000,000, preferably 300,000 to 800,000, can be used for the present invention. It preferably has a melting point of 150°C or higher. Particularly preferably, it is incorporated with a polysaccharide (e.g., cellulose or starch) or another additive at 10 to 50% by weight for fabricability.

Polyurethane resin has the urethane bond -NHCOO- in the recurring unit in the main chain. Normally, the one produced by polyaddition of an organic diisocyanate and high-molecular-weight diol can be used for the present invention. The organic diisocyanates useful for the present invention include 4,4'-diphenylmethane diisocyanate, p-phenylene diisocyanate, tolylene diisocyanate and 4,4'-cyclohexylmethane diisocyanate, which are normally used as starting compounds for production of polyurethane. The high-molecular-weight diols and triols useful for the present invention are not limited, and the polyether type ones, e.g., polyoxypropylene glycol and polyoxypropylene-polyoxyethylene glycol, may be used. The polyurethane resin as the preferable matrix material of organic polymer contains a high-molecular-weight diol having an average molecular weight of 500 to 10,000, particularly preferably 1,000 to 7,000.

Of the various polymers cited above as the ones useful for the present invention as the matrix materials of organic polymer for the vibration-damping material, acrylate/methyl methacrylate-based resin, acrylic rubber, polylactic resin, and a mixture of acrylic rubber and polylactic resin, and polylactic acid and polybutylene succinate resin are more preferable. The preferable mixture which can be used for the present invention is composed of polybutylene succinate resin (A) and polylactic resin (B) in an (A): (B) ratio of (10 to 90):(90:10) by weight, preferably (15 to 70):(85:30).

As the organic polymer for the matrix, a resin emulsion or the one produced via a resin emulsion may be used. One example of such a resin emulsion comprises the resin dispersed in water or another solvent or emulsified. The aqueous emulsion produced with water is preferable for environmental protection. Moreover, it is produced by a simple procedure, and can give a coating film of uniform quality. The solid content of the resin emulsion can be optionally set. However, it is preferably 20 to 80% by weight, particularly preferably 35 to 65%. The resin in the emulsion has an average particle size of 0.01 to 50µm, particularly preferably 0.1 to 10 µm.

When the vibration-damping material composition is to be used for sheet-shaped formed articles, the organic polymer matrix for the composition has a function of stabilizing the sheet-shaped formed article and also a function as the diluent for the master batch of the vibration-damping agent. The polymers described above can make the matrix which is required to have the above characteristics.

Next, the vibration-damping agent as one of the constituents for the vibration-damping material composition of the present invention is a polyvinyl phenol-based resin having a recurring unit represented by the general formula [I]:

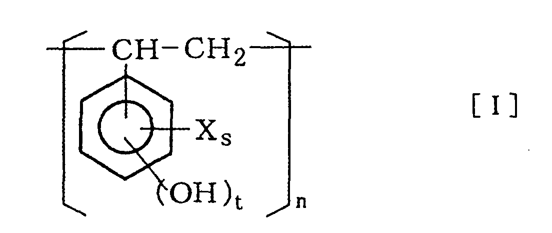

The polyvinyl phenol-based resin is peculiar in that it contains the above-described recurring unit. These compounds include both polyvinyl phenol homopolymer and copolymer resins.

In the general formula [I], X is at least one type of substituent selected from the group consisting of an alkyl group, alkylol group and halogen atom; and "s" is an average substitution rate and integer of 0 to 2. The alkyl and alkylol group preferably has a carbon number of 1 to 3. The halogen atoms useful for the present invention include bromine, chlorine and fluorine, of which bromine is more preferable. "t" represents number of hydroxyl groups in each ring, and 1 or 2, preferably 1. "n" is a numeral of 5 to 200, preferably 10 to 160, by which is meant that a high-molecular-weight compound may be used for the vibration-damping agent. It may be set in an optimum range, i.e., the vibration-damping agent of optimum molecular weight may be selected, for specific purposes of the vibration-damping material.

The polyvinyl phenol-based resin as the vibration-damping agent for the vibration-damping material composition of the present invention has a weight-average molecular weight of 700 to 50,000, preferably 1,500 to 30,000. A polyvinyl phenol-based resin having a weight-average molecular weight below 700 may not sufficiently exhibit the vibration-damping function, and one having a weight-average molecular weight above 50,000 may have insufficient interactions with the matrix of organic polymer.

The polyvinyl phenol-based copolymer resin contains the copolymer component. The copolymerizable monomer can be at least one type of monomer selected from the group consisting of vinyl carboxylate esters (e.g., vinyl acetate and vinyl propionate); unsaturated carboxylate esters (methyl (meth)acrylate, ethyl (meth)acrylate, lauryl (meth)acrylate, stearyl (meth)acrylate, 2-hydroxyethyl (meth)acrylate, diethyl maleate and dimethyl itaconate); aromatic vinyl compounds (e.g., styrene and α-methyl styrene) and olefins (ethylene, propylene, butadiene and isoprene); methyl vinyl ether, isobutyl vinyl ether, cetylvinyl ether, (meth)acrylic acid, acid phosphoxyethyl (meth)acrylate, styrenesulfonic acid, vinyl alcohol, allyl glycidyl ether and glycidyl (meth)acrylate. The preferable copolymer components include acrylic acid-based monomer, methacrylic acid-based monomer and styrene.

The acrylic acid-based monomers useful for the present invention include alkyl acrylates, e.g., methyl acrylate, and ethyl acrylate, and methacryl acid-based monomers include 2-hydroxyethyl methacrylate. The vinyl phenol component is preferably contained at 30 to 60% by mol of the total monomers. The polyvinyl phenol-based resin is not limited, so long as it has a straight-chain or branched chemical structure.

The polyvinyl phenol copolymer particularly preferable for the vibration-damping material composition of the present invention is the one represented by the general formula [II]:

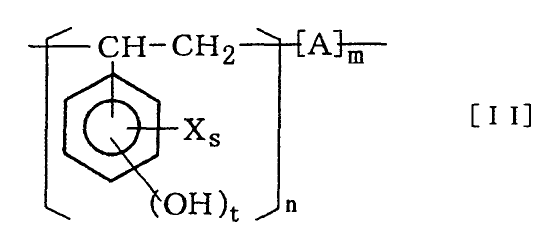

In the general formula [II], the recurring unit is the same as that in the general formula [I], and A is at least one polymerizable monomer selected from the group of polymerizable monomers represented by the following formulae (1) ∼ (8): 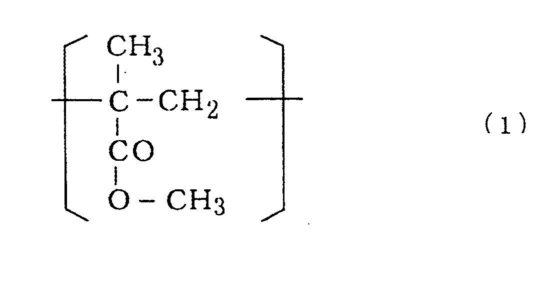 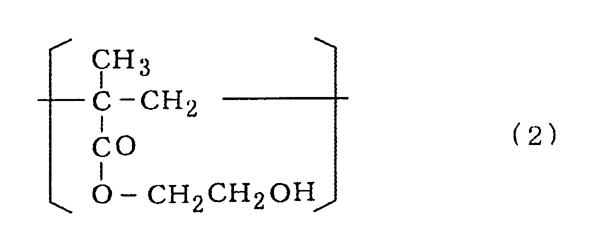 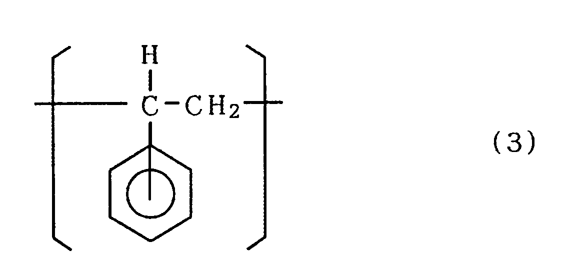 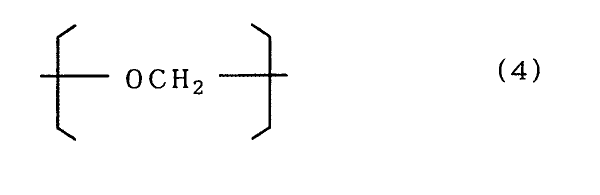 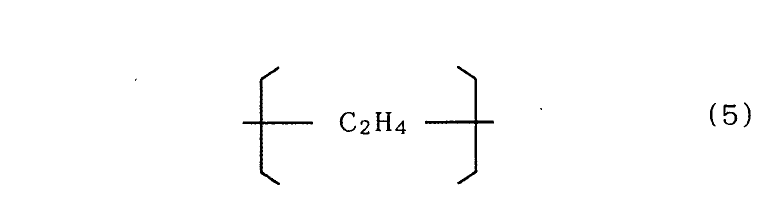 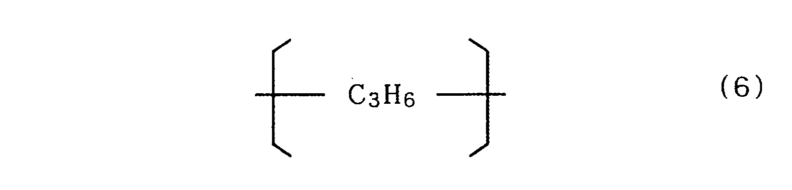 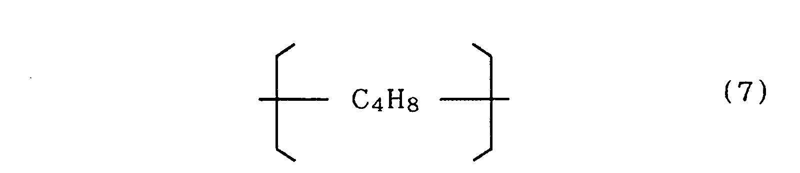 and 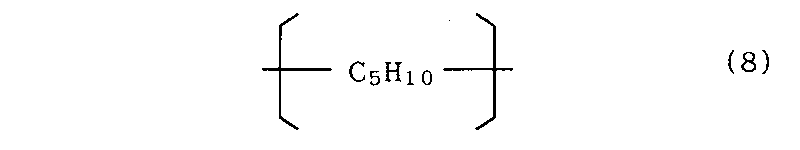 wherein, "m" is a numeral of 1 to 200, particularly preferably 5 to 100.

The resins having the recurring unit represented by the general formula [I] or [II] and exhibiting the notable vibration-damping function include a polyparavinyl phenol-based resin whose vinyl group is bonded to the 4-site of the hydroxyl group, and brominated polyparavinyl phenol-based resin.
The commercial products of these polyparavinyl phenol-based resins include Maruzen Petrochemical's Marukalyncur MS-1P, MS-2P, MS-3P, MS-4P, MH-2P and MB.

These phenol-based compounds bring a very notable vibration-damping effect as vibration-damping agents over a wide temperature range. They can be produced at a low cost, thereby greatly contributing to the industry.

The vibration-damping agent can be incorporated at 5 to 60% by weight of the whole vibration-damping material composition, preferably 10 to 55%, more preferably 15 to 50%. At below 5%, it may not produce the desired vibration-damping effect. At above 70%, on the other hand, it may cause phase separation from the matrix material of organic polymer.

The vibration-damping material composition of the present invention may be supplied as a master batch which contains the vibration-damping agent at a high concentration, and diluted before being used. In this case, the base polymer may contain the polar group described earlier. The resin as the diluent may be selected from those other than the base polymer, e.g., a polyolefin lacking a polar group. It may be optionally selected depending on specific purposes of the composition.

Next, the filler as the constituent component of the vibration-damping material composition is described. The filler type is not limited, so long as it strongly interacts with the organic polymer matrix. It may be inorganic, carbon-based or organic and piezoelectricity materials.

The inorganic fillers useful for the present invention include layered compounds containing SiO₂, Al₂O₃, MgO, Na₂O or the like, e.g., calcium carbonate, talc, magnesia, saponite, smectite, montmorillonite, vermiculite, xonotlite, mica, powdered stainless steel, tourmaline, BaTiO₃ and PbTiZrO₃; and talc, calcium carbonate, natural and synthetic zeolite, mesoporous zeolite and flaky silica. The carbon-based fillers useful for the present invention include Ketjen's black carbon, sheathed carbon and flaky graphite.

The inorganic filler is particularly preferably basic, when the organic polymer is acidic. The basic inorganic fillers useful for the present invention include TiO₂, MgO, CaO and talc. A layered silicate clay mineral may be also used as the acidic inorganic filler. Such a mineral is preferably of 2:1 type, in particular the one having a relatively large basal plane distance, i.e., relatively large unit structure thickness or cycle in the direction perpendicular to the layer plane, e.g., the one having the distance of around 14 to 15Å or more. Specifically, those useful for the present invention include smectite, montmorillonite, saponite, vermiculite and a mixture thereof, in addition to mica.

The organic fillers useful for the present invention include dibenzylidene sorbitol, tetrafluoropolyethylene, gelol D, powdered cellulose, non-woven fabric, wood chips, sugar, paper, cellulose and FRP and liquid crystal polymer materials. Preferable liquid crystal polymers include an aromatic polyester, aromatic polyester amid and relating compound. For example, as a commercially-availabel organic filler POLYARYLATE® fiber can be used.

As the piezoelectricity materials mentioned above, barium titanate powder, polyamid, polyvinylidene fluoride, glassy carbon are preferable.

A combination of the inorganic and organic fillers can significantly expand a temperature region in which loss modulus (E") can be kept at a high level.
The inorganic or organic filler is preferably used in the form of fine particles, in particular flakes, or fibers. Those having an average particle diameter of 1 to 200µm, in particular 40 to 100 µm, will greatly contribute to vibration and sound absorption.

In particular, a combination of the polyvinyl phenol-based resin partly substituted by the organic filler, organic filler and inorganic filler brings a notable effect of achieving a high loss modulus (E") over a wide temperature range, in particular high temperature range.

The filler (inorganic or organic filler, or a combination thereof) is incorporated at 2 to 80% by weight of the whole vibration-damping material composition, preferably 20 to 60%. At below 2%, it may not sufficiently improve the vibration absorption performance. At above 80%, on the other hand, it may cause problems, e.g., phase separation which deteriorates composition strength, with the result that the composition may be difficult to keep sufficient strength. In particular, the organic filler, when used, is incorporated preferably at 2 to 30% by weight, particularly preferably 5 to 20%.

The preferable contents of the matrix material of organic polymer (a), polyvinyl phenol-based resin (b) and inorganic and/or organic filler (c) components of the vibration-damping material composition of the present invention are (a): 50 to 50%, preferably 10 to 40%, (b): 5 to 60%, preferably 10 to 40%, and (c): 2 to 70%, preferably 10 to 60%, all percentages being by weight.
The organic or inorganic filler may be used as a master batch of the resin composition with a base resin and the vibration-damping agent, as is the case with the vibration-damping agent.

In the vibration-damping material composition of the present invention, the base resin as the organic polymer may be further incorporated, as required, with another organic polymer, depending on specific purposes of the composition. These organic polymers, other than those used for the base resin, useful for the present invention include melamine resin, phenol resin, polyethylene terephthalate, polycarbonate and polyolefin.
Moreover, the vibration-damping material composition of the present invention may be further incorporated with one or more other additives, e.g., lubricant, ageing inhibitor and foaming agent.

The vibration-damping materials of the present invention is used in the form of fibers, granules, particles or the like. Any form may be used for the machines and tools, buildings or the like which need vibration-damping and for which it is used. It is particularly preferably used in the form of sheet-shape formed article. Its thickness can be optionally set for specific purposes and required performance. However, it is preferably 0.05 to 7mm, particularly preferably 1 to 4mm.
The vibration-damping material composition of the present invention may be also supplied in the form of coating material. For example, it may be spread on a foamed structure or structure of complex shape, or on two or more layers to form a laminate and the vibration-damping material is put in the layered structure. It may be used for all types of structures, e.g., buildings, machines and tools, and transportation equipment which need vibration-damping.

The process for producing the vibration-damping material composition of the present invention described above is not limited. For production of the sheet-shape formed article and coating material, the following processes may be used. The specific process conditions can be selected depending on, e.g., starting materials and specific purposes of the composition.

### (1) Sheet-shape formed article

Particles of the organic polymer (a) and vibration-damping agent (b), or those of the organic polymer (a), vibration-damping agent (b) and organic and/or inorganic filler (c) in a given ratio are kneaded at normal temperature or higher, and formed into a sheet shape by pressing or stretching under the temperature/pressure conditions needed for pressing the mixture, e.g., 60 to 300°C, preferably 100 to 200°C, and 100 to 300kgf/cm², preferably 150 to 250kgf/cm².

### (2) Coating material

The coating solution containing an emulsion of the organic polymer (a) dispersed/mixed with the vibration-damping agent (b), or an emulsion of the organic polymer (a) dispersed/mixed with the vibration-damping agent (b) and organic and/or inorganic filler (c) is prepared. The mixing ratio of each starting material for the coating material may be adjusted to obtain the vibration-damping material composition.

The sheet-shape formed article may be applied to one or more planes which need vibration-damping after being placed in one or more spaces between layers of a laminate or pressed to the surface.

The vibration-damping material composition of the present invention may be also supplied in the form of liquid, e.g., coating material. It brings a vibration-damping function after being spread in a space between a laminate or on its surface.

### EXAMPLES

The present invention is described in more detail by EXAMPLES and COMPARATIVE EXAMPLES, which by no means limit the present invention.

Loss modulus (E") of the vibration-damping material composition prepared in each of EXAMPLES and COMPARATIVE EXAMPLES was measured by a dynamic viscoelasticity tester DVA-200S (IT Measurement Control Co., Ltd.) in a temperature range from -50 to 100°C at a frequency of 50Hz and heating rate of 5°C/minute in a tensile mode with a dynamic strain of 0.1%. The test piece size was around 20mml × 5mmw × 1mmt.

Loss factor (η) was measured by the central vibration method in accordance with JIS G-0602 (1993) using an evaluation apparatus illustrated in FIG.1, where A: test sample comprising the sheet A₁ of vibration-damping material bonded to the cold-rolled steel sheet A₂ as the base, B: impedance head, C: vibrator, and D: analyzer (for measuring loss factor (η) from the resonance peak by the half-width method, after it was Fourier-transformed by a modal analysis software). The base size was 200mml × 10mmw × 0.8mmt, and the sample was adjusted to have a sample surface density of 2kg/m².

### EXAMPLES 1 to 7

A vibration-damping material composition was prepared in each of EXAMPLES 1 to 7, wherein 100 parts by weight of acrylic rubber as the matrix material of organic polymer was incorporated with a varying poly4-vinyl phenol resin (Polyparavinyl phenol resin) (Maruzen Petrochemical's "Marukalyncur -M" series) given in Table 1 as the vibration-damping agent in a quantity also given in Table 1. Each mixture was hot-pressed at 180°C and 200kgf/cm², to be formed into a 1mm thick sheet-shape vibration-damping material composition. The evaluation results are given in Table 1.

### EXAMPLES 8 and 9

A vibration-damping material composition was prepared in each of EXAMPLES 8 and 9, wherein a 50/50 mixture of polylactic resin and polybutylene succinate was incorporated with a varying poly4-vinyl phenol resin (Maruzen Petrochemical's "Marukalyncur-M" series) given in Table 1 as the vibration-damping agent in a quantity also given in Table 1. Each mixture was hot-pressed at 180°C and 200kgf/cm², to be formed into a 1mm thick sheet-shape vibration-damping material composition.

### COMPARATIVE EXAMPLES 1 to 4

A vibration-damping material composition was prepared in each of COMPARATIVE EXAMPLES 1 and 2, wherein acrylic rubber as the matrix material of organic polymer was incorporated with 2,2'-methylen-bis(4-methyl-6-t-butyl phenol or 4,4'-thio-bis(4-methyl-6-t-butyl phenol as the vibration-damping agent in a quantity given in Table 2. The vibration-damping composition prepared in COMPARATIVE EXAMPLE 3 or 4 was composed of polylactic resin or polybutylene succinate, free of any phenol-based resin. The evaluation results of each vibration-damping material composition are given in Table 2.

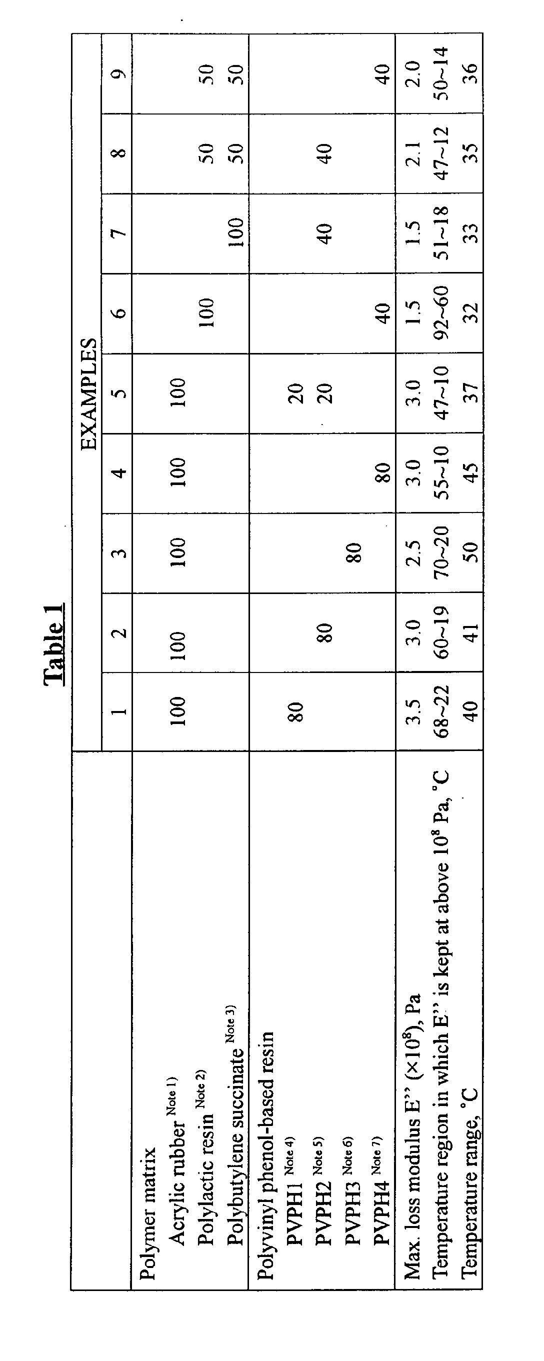

**Table 2**

| | COMPARATIVE EXAMPLES | | | |
|---|---|---|---|---|
| | 1 | 2 | 3 | 4 |
| Polymer matrix | | | | |
| Acrylic rubber ^{Note 1)} | 100 | 100 | | |
| Polylactic resin ^{Note 2)} | | | 100 | |
| Polybutylene succinate ^{Note 3)} | | | | 100 |

| Phenol-based compound | | | | |
|---|---|---|---|---|
| PH101 ^{Note 8)} | 80 | | | |
| PH102 ^{Note 9)} | | 80 | | |
| Max. loss modulus E" (× 10⁸), Pa | 2.8 | 2.9 | 2.3 | 1.1 |
| Temperature region in which E" is kept at above 10⁸ Pa, °C | 23∼-2 | 36∼11 | 69∼56 | -17∼-30 |
| Temperature range, °C | 25 | 25 | 13 | 13 |

| | | | | |
|---|---|---|---|---|
| Note 1) Acrylic rubber (Nippon Zeon Corp.'s A R32) | | | | |
| Note 2) Polylactic resin (Shimadzu Corp.'s Lacty 5000) | | | | |
| Note 3) Polybutylene succinate Showa Highpolymer's Bionolle 1001 Note 4) PVPH1: Poly4-vinyl phenol resin (weight-average molecular weight: 2100) (Maruzen Petrochemical's Marukalyncur M S-1P) Note 5) PVPH2: Poly4-vinyl phenol resin (weight-average molecular weight: 4800) (Maruzen Petrochemical's Marukalyncur M S-2P) Note 6) PVPH3: Poly4-vinyl phenol resin (weight-average molecular weight: 9300) (Maruzen Petrochemical's Marukalyncur M S-4P) Note 7) PVPH4: Poly4-vinyl phenol resin (weight-average molecular weight: 20,900) (Maruzen Petrochemical's Marukalyncur M H-2P) | | | | |
| Note 8) PH101:Methylene-bis(4-methyl-6-t-butylphenol) (Ouchishinko Chemical Industrial's Nocrac NS6) | | | | |
| Note 9) PH102:Thio-bis(3-methyl-6-t-butylphenol) (Ouchishinko Chemical Industrial's Nocrac 300) | | | | |

### EXAMPLES 11 to 14

A vibration-damping material composition was prepared in each of EXAMPLES 11 to 14, wherein a mixture of acrylic rubber and polypropylene in a ratio given in Table 3 was incorporated with a poly4-vinyl phenol resin given in Table 3 as the vibration-damping agent in a quantity also given in Table 3. Each mixture was hot-pressed at 140 to 180°C and 100 to 200kgf/cm² for 20 minutes, to be formed into a sheet-shape vibration-damping material composition.

Each sheet-shape composition was measured for the temperature region in which its loss factor(η) was kept at 0.08 or more by the procedure described earlier to determine it vibration-damping performance. The evaluation results are given in Table 3.

### EXAMPLES 15 to 21

A coating material was prepared in each of EXAMPLES 15 to 21, wherein a mixture of acrylic-, vinyl acetate- and polyurethane-based emulsion was incorporated with a poly4-vinyl phenol resin and copolymer one in a quantity given in Table 4, and further with a stabilizer, dispersant, defoaming agent, filler, viscosity modifier, water and inorganic filler.

Each coating material was spread in a given quantity on a base board, naturally dried, and thermally treated at 100 to 200°C. The evaluation results are given in Table 4.

**Table 3**

| | EXAMPLES | | | |
|---|---|---|---|---|
| | 11 | 12 | 13 | 14 |
| Polymer matrix | | | | |
| Acrylic rubber ^{Note 1)} | 100 | 80 | 100 | 70 |
| Polypropylene resin ^{Note 2)} | | 20 | | 30 |

| Polyvinyl phenol-based resin | | | | |
|---|---|---|---|---|
| PVPH1 ^{Note 3)} | | 40 | | |
| PVPH2 ^{Note 4)} | | | 80 | |
| PVPH3 ^{Note 5)} | 40 | | | |
| PVPH4 ^{Note 6)} | | | | 50 |
| OF2 ^{Note 7)} | | | 10 | |
| IF 1 ^{Note 8)} | 70 | 50 | 20 | 80 |
| IF3 ^{Note 9)} | 10 | | | |
| Temperature performance | | | | |
| which gives a loss factor (η) above 0.08 | | | | |
| • Primary resonance (20 to 110Hz) | | | | |
| Temperature region, °C | 55-15 | 40∼0 | 55∼15 | 55∼10 |
| Temperature range, °C | 40 | 40 | 40 | 45 |
| • Secondary resonance (300 to 750Hz) | | | | |
| Temperature region, °C | 58∼18 | 45-5 | 58∼20 | 58∼18 |
| Temperature range, °C | 40 | 40 | 38 | 40 |
| • Tertiary resonance (1000 to 2500Hz) | | | | |
| Temperature region, °C | 60-24 | 50∼16 | 60-25 | 60-22 |
| Temperature range, °C | 36 | 34 | 35 | 38 |

| | | | | |
|---|---|---|---|---|
| Note 1) Acrylic rubber (Nippon Zeon Corp.'s A R32) | | | | |
| Note 2) Random polypropylene (Idemitsu Petrochemical) | | | | |
| Note 3) PVPH1; Poly4-vinyl phenol-based resin (weight-average molecular weight: 2100) (Maruzen Petrochemical's Marukalyncur M S-1P) | | | | |
| Note 4) PVPH2; Poly4-vinyl phenol-based resin (weight-average molecular weight: 4800) (Maruzen Petrochemical's Marukalyncur M S-2P) | | | | |
| Note 5) PVPH3; Poly4-vinyl phenol-based resin (weight-average molecular weight: 9300) (Maruzen Petrochemical's Marukalyncur M S-4P) | | | | |
| Note 6) PVPH4; Poly4-vinyl phenol-based resin (weight-average molecular weight: 20900) (Maruzen Petrochemical's Marukalyncur M H-2P) | | | | |
| Note 7) OF2; Dibenzylidene sorbitol (Chiba Specialty Chemicals' IRGACLEAR D) | | | | |
| Note 8) IF1; Kuraray's suzolite 200HK mica | | | | |
| Note 9) IF3;Cabot's sheathed 300 Carbon | | | | |

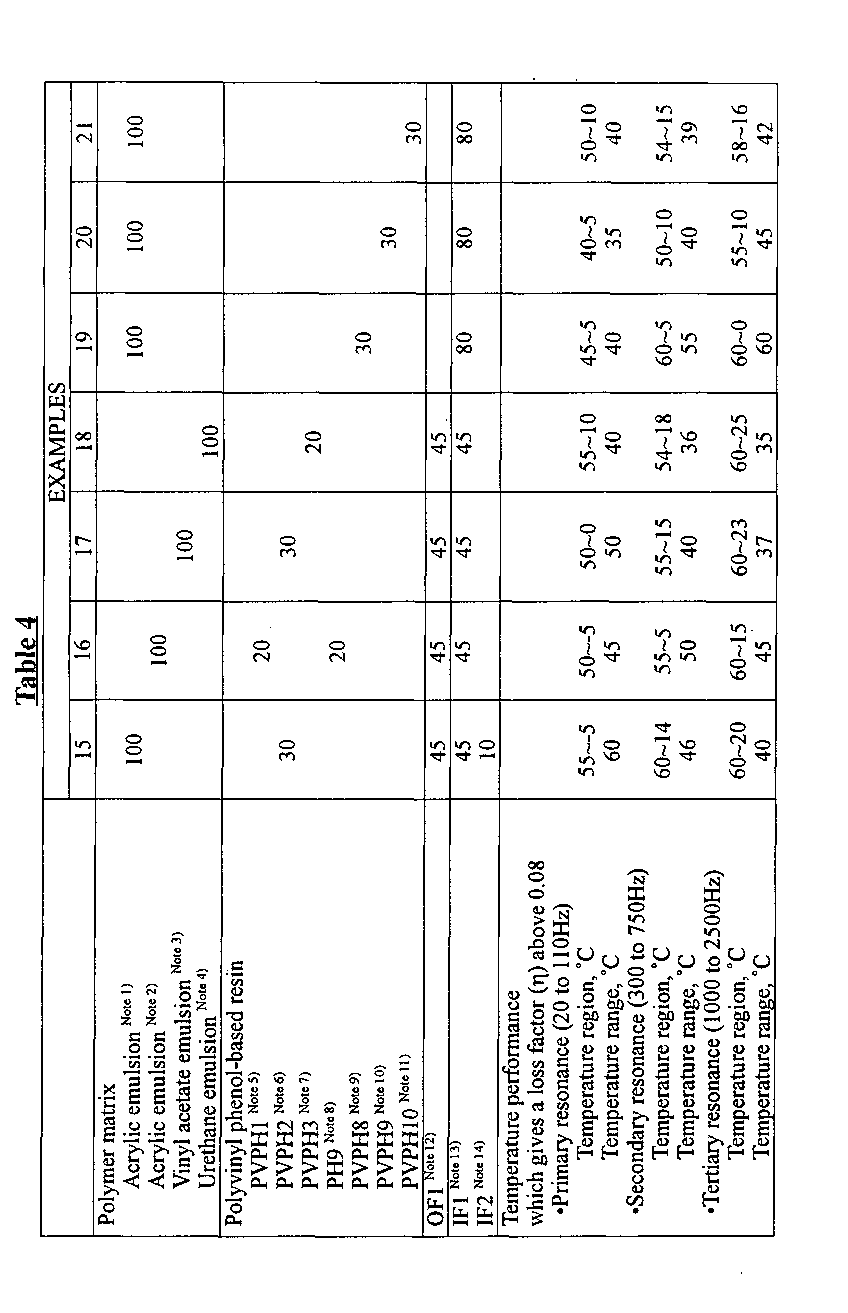

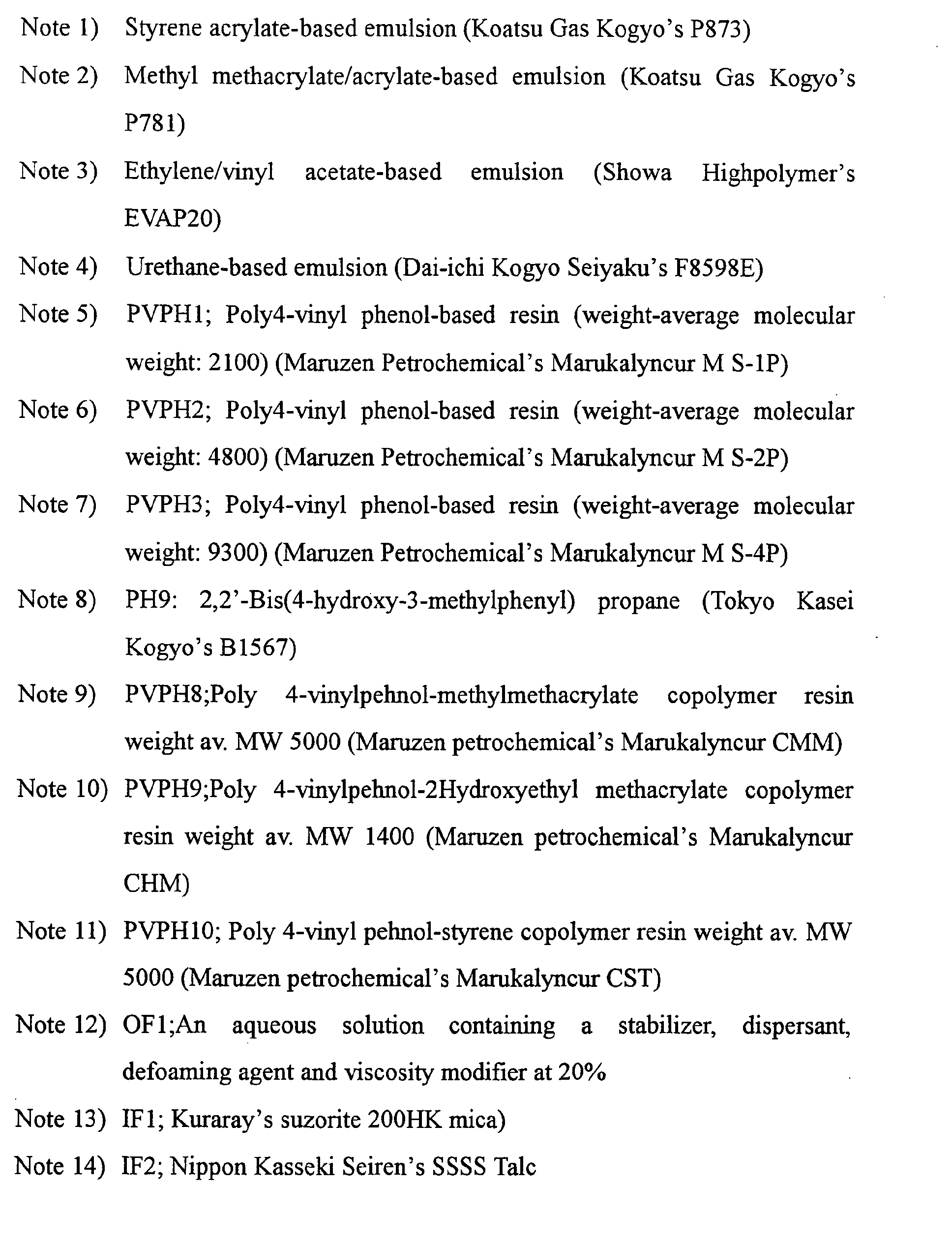

### COMPARATIVE EXAMPLE 5

A vibration-damping composition was prepared under the same conditions, except that poly4-vinyl phenol-based resin was replaced by 2,2'-methylene-bis(4-methyl-6-t-butylphenol), which is a hindered phenol-based compound. The evaluation results are given in Table 5.

### COMPARATIVE EXAMPLE 6

A vibration-damping composition was prepared using the same starting materials and under the same conditions as in COMPARATIVE EXAMPLE 1, except that poly4-vinyl phenol-based resin was replaced by 4,4'-thiobis(3-methyl-6-t-butylphenol), which is a hindered phenol-based compound. The evaluation results are given in Table 5.

**Table 5**

| | COMPARATIVE EXAMPLES | |
|---|---|---|
| | 5 | 6 |
| Polymer matrix | | |
| Acrylic rubber ^{Note 1)} | 100 | 100 |
| Polyvinyl phenol-based resin | | |
| PH101 ^{Note 2)} | 80 | |
| PH102 ^{Note 3)} | | 80 |
| IF1 ^{Note 4)} | 310 | 310 |

| Temperature performance which gives a loss factor (η) above 0.08 | | |
|---|---|---|
| •Primary resonance (20 to 110Hz) | | |
| Temperature region, °C | 29-9 | 45∼18 |
| Temperature range, °C | 20 | 27 |
| •Secondary resonance (300 to 750Hz) | | |
| Temperature region, °C | 33∼11 | 50-28 |
| Temperature range, °C | 22 | 22 |
| •Tertiary resonance (1000 to 2500Hz) | | |
| Temperature region, °C | 40∼15 | 44-22 |
| Temperature range, °C | 25 | 22 |

| | | |
|---|---|---|
| Note 1) Acrylic rubber (Nippon Zeon Corp's AR32) | | |
| Note 2) PH101; 2,2'-Methylene-bis(4-methyl-6-tertiary-butylphenol) (Ouchishinko Chemical Industrial's NOCRAC N36) | | |
| Note 3) PH102; Thio-bis(3-methyl-6-tertiary-butylphenol) (Ouchishinko Chemical Industrial's NOCRAC 300) | | |
| Note 4) IFI; An aqueous solution containing a stabilizer, desparsant, defoaming agent and viscosity modifier at 20%. | | |

The present invention can provide a vibration-damping material composition having, as described above, a high max. loss modulus (E") and a wide temperature range extending from normal temperature to high temperature in which E" is kept at above 10⁸Pa, because it comprises an organic polymer matrix (a) and polybiphenol-based vibration-damping agent (b). The present invention also can provide a vibration-damping material composition having a high loss factor (η), because it comprises an organic polymer matrix (a), vibration-damping agent (b) and organic and/or inorganic filler (c). Moreover, the present invention also can provide a vibration-damping material composition improved both in max. loss modulus (E") and loss factor (η), bringing a much greater vibration-damping effect than the one incorporated with the known vibration-damping agent.

## Claims

1. A vibration-damping composition whose matrix material of organic polymer contains a vibration-damping agent, wherein the vibration-damping agent is of a polyvinyl phenol-based resin having a recurring unit represented by the general formula [I]: 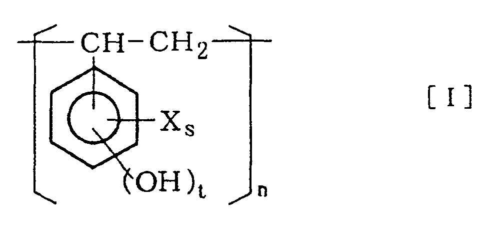 (in the general formula [I], X is at least one type of substituent selected from the group consisting of an alkyl group, alkylol group and halogen atom; "s" is a numeral of 0 to 2; "t" is an integer of 1 or 2; and "n" is a numeral of 5 to 200).

2. A vibration-damping composition whose matrix material of organic polymer contains a vibration-damping agent, and inorganic and/or organic filler, wherein the vibration-damping agent is of a polyvinyl phenol-based resin having a recurring unit represented by the general formula [I]: 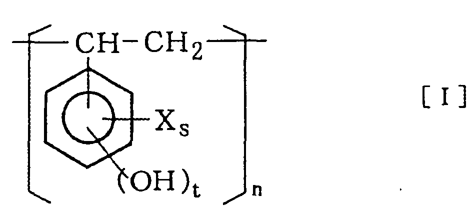 (in the general formula [I], X is at least one type of substituent selected from the group consisting of an alkyl group, alkylol group and halogen atom; "s" is a numeral of 0 to 2; "t" is an integer of 1 or 2; and "n" is a numeral of 5 to 200).

3. The vibration-damping composition according to Claim 1 or 2, wherein said matrix material of organic polymer is of at least one type of high-molecular-weight compound selected from the group consisting of vinyl acetate-based resin, ethylene/vinyl acetate-based resin, epoxy-based resin, alkyd-based resin, polyester-based resin, polyurethane-based resin, polycarbonate-based resin, polylactic-based resin, polybutylene succinate resin, polyether-based resin, ethylene/methacrylate-based resin, acrylate/methacrylate-based resin, acrylonitrile/styrene-based copolymer, acrylonitrile/butadiene/styrene-based resin, acrylic rubber, butyl rubber, halogenated polyolefm, polyethylene and polypropylene.

4. The vibration-damping composition according to Claim 1 or 2, wherein said matrix material of organic polymer is of acrylic rubber and/or acrylate/methacrylate-based resin.

5. The vibration-damping composition according to Claim 1 or 2, wherein said matrix material is of polylactic resin or a mixture of polylactic acid resin, acrylic rubber and acrylate/methacrylate-based resin.

6. The vibration-damping composition according to anyone of Claims 1 to 5, wherein said vibration-damping agent is of a poly4-vinyl phenol homopolymer resin having a weight-average molecular weight of 700 to 50,000.

7. The vibration-damping composition according to anyone of Claims 1 to 6, wherein said vibration-damping agent is of a polyvinyl phenol copolymer having a recurring unit represented by the general formula [II]: 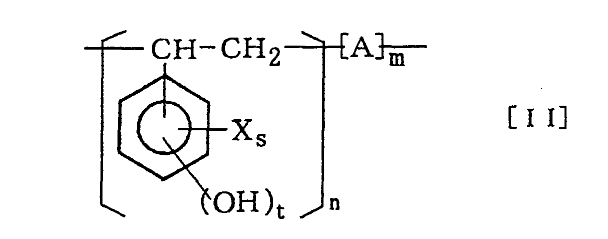 (in the general formula [II], X is at least one type of substituent selected from the group consisting of an alkyl group, alkylol group and halogen atom; "s" is a numeral of 0 to 2; "t" is an integer of 1 or 2; "m" is a numeral of 1 to 200; "n" is a numeral of 5 to 200; and A is a polyvinyl phenol copolymer having a recurring unit represented by the formula selected from the formulae (1) to (8): 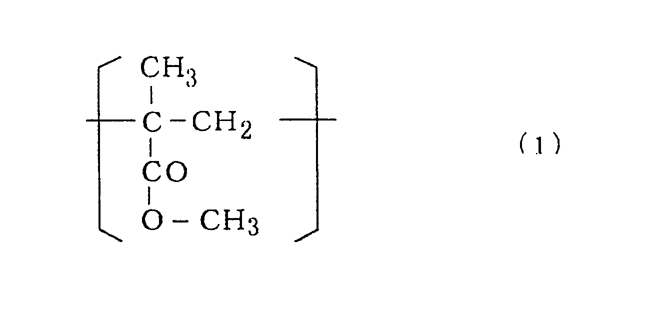 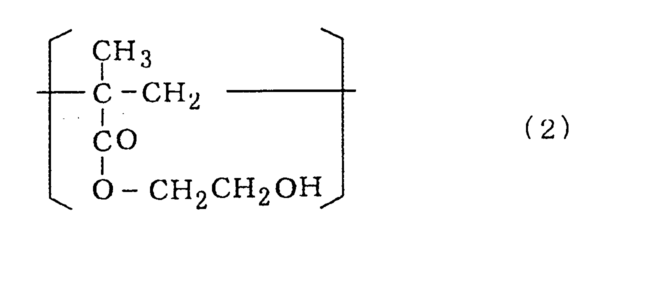 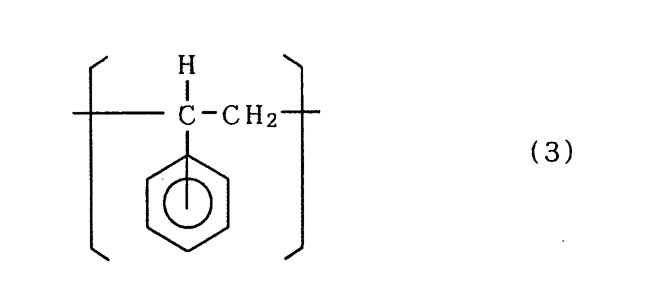 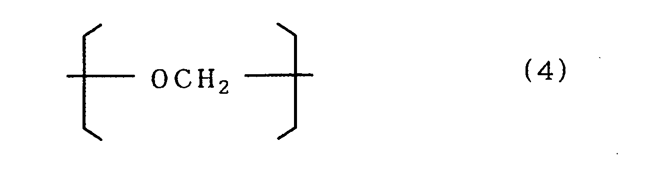 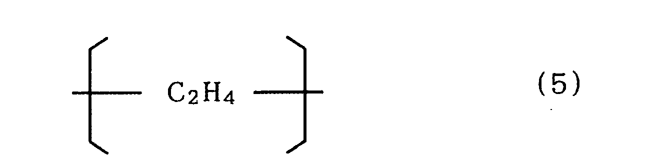 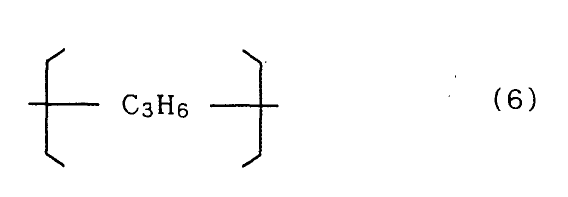 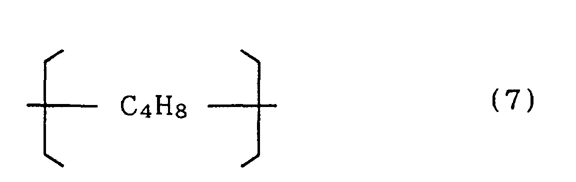 and

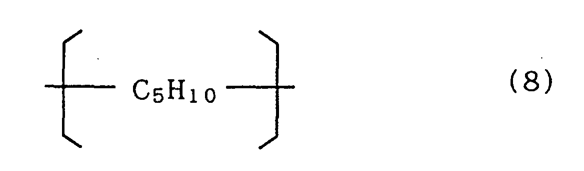

8. The vibration-damping composition according to anyone of Claims 1 to 7, wherein said vibration-damping agent is incorporated at 5 to 60% by weight of the whole composition.

9. The vibration-damping composition according to anyone of Claims 2 to 8, wherein said inorganic filler is at least one type of inorganic compound selected from the group consisting of those for basic inorganic fillers, acidic inorganic fillers and piezoelectricity materials.

10. The vibration-damping composition according to anyone of Claims 2 to 8, wherein said organic filler is a liquid crystal polymer material.

11. The vibration-damping composition according to anyone of Claims 2 to 10, wherein said inorganic and/or organic filler is incorporated at 2 to 80% by weight, of the whole composition.

12. The vibration-damping composition according to anyone of Claims 1 to 11, which is formed into a 0.05 to 7mm thick sheet-shape article.

13. The vibration-damping composition according to anyone of Claims 1 to 11, which is spread on a structure to form the coating film thereon.

14. A vibration-damping agent represented by the general formula [I]: 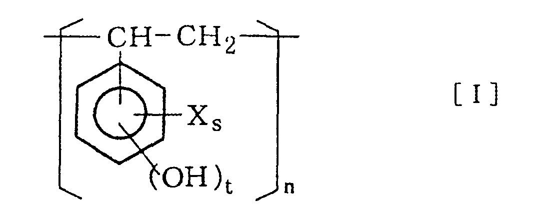 wherein
in the general formula [I], X is at least one type of substituent selected from the group consisting of an alkyl group, alkylol group and halogen atom; "s" is a numeral of 0 to 2; "t" is an integer of 1 or 2; and "n" is a numeral of 5 to 200.
